# EUROPÄISCHE PATENTSCHRIFT

(11) **EP 1 334 153 B1**
(45) Veröffentlichungstag und Bekanntmachung des Hinweises auf die Patenterteilung: **29.11.2006**
(21) Anmeldenummer: 01980503.5
(22) Anmeldetag: 22.10.2001
(51) Int. Cl.: C08L 69/00

(54) **SCHLAGZÄHMODIFIZIERTE POLYCARBONAT-ZUSAMMENSETZUNGEN**
IMPACT-RESISTANT MODIFIED POLYCARBONATE COMPOSITIONS
COMPOSITIONS DE POLYCARBONATE A RESILIENCE MODIFIEE

(30) Priorität: 02.11.2000 DE 10054275
(43) Veröffentlichungstag der Anmeldung: 13.08.2003
(73) Patentinhaber: Bayer MaterialScience AG, 51368 Leverkusen (DE)
(72) Erfinder: WARTH, Holger, 41539 Dormagen (DE); WITTMANN, Dieter, 51375 Leverkusen (DE); KELLER, Bernd, 47608 Geldern (DE); HÄUSSLER, Martin, 42859 Remscheid (DE)
(86) Internationale Anmeldenummer: PCT/EP2001/012160
(87) Internationale Veröffentlichungsnummer: WO 2002/036686

(56) Entgegenhaltungen:
- EP-A- 0 537 014
- DE-A- 19 953 297
- GB-A- 1 590 549
- US-A- 5 807 914

## Beschreibung

Die vorliegende Erfindung betrifft Polycarbonat-Zusammensetzungen enthaltend Silikonacrylatpfropfkautschuke, (Co)Polymere auf Basis von Vinylmonomeren sowie mineralische Füllstoffe, insbesondere Glasfasern.

Aus EP-A 663 425 ist bekannt, durch Zugabe von zwei speziellen Arten von Kautschuk zu Polycarbonat-Harz mit bestimmter Struktur die Schlagzähigkeit, besonders bei tiefen Temperaturen zu verbessern. Bei den speziellen Arten von Kautschuk handelt es sich um einen gepfropften Kautschuk-Komplex enthaltend Polyorganosiloxane und Polyalkyl(meth)acrylat. Glasfasern werden allgemein als übliche Additive erwähnt.

US-A 5,807,914 beschreibt glasfaserverstärkte Polycarbonat-Mischungen enthaltend den in EP-A 663 423 bereits erwähnten speziellen Kautschuk-Komplex, wobei die Mischung dadurch gekennzeichnet ist, dass eine Polycarbonat-Mischung aus üblichem Polycarbonat mit 1 - 20 Gew.-% oligomerem aromatischen Polycarbonat eingesetzt wird. Diese Harzmischung zeichnet sich gemäß US-A 5,807,914 durch gute Verarbeitbarkeit, gute Oberflächenbeschaffenheit, Steifheit und Schlagzähigkeit aus.

Aufgabe der vorliegenden Erfindung ist die Verbesserung der Alterungsstabilität, insbesondere des Wärmealterungsverhaltens und der Oberflächengüte, sowie der Verarbeitbarkeit von thermoplastischen Zusammensetzungen und daraus hergestellter Formteile.

Es wurde nun gefunden, dass Zusammensetzungen enthaltend Polycarbonat, Silikonacrylatpfropfkautschuk, (Co)Polymer auf Basis von Vinylmonomeren, mineralische Füllstoffe, insbesondere Glasfasern, die das gewünschte Eigenschaftsprofil aufweisen.

Gegenstand der vorliegenden Erfindung sind somit Polycarbonat-Zusammensetzungen enthaltend
A) 40 - 95, vorzugsweise 45 - 90, insbesondere 55 - 80 Gew.-Teile aromatisches Polycarbonat und/oder Polyestercarbonat
B) 0 - 45, vorzugsweise 5 - 40, besonders bevorzugt 10 - 35 und ganz besonders bevorzugt 15 - 30 Gew.-Teile (Co)Polymer auf Basis von Vinylmonomeren
C) 1 - 25, vorzugsweise 2 - 20, insbesondere 3 - 15 Gew.-Teile Silikonacrylatpfropfkautschuk und
D) 0,4 - 40, vorzugsweise 1 - 30, besonders bevorzugt 3 - 20, insbesondere 5*-*18 Gew.-Teile mineralischer Füllstoff,
wobei die Summe der Komponenten A bis D 100 ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 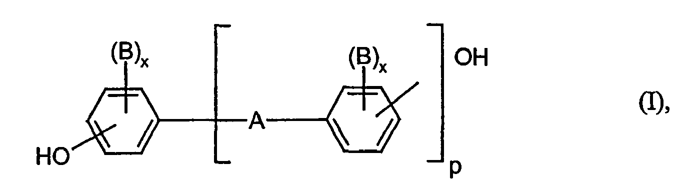 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können, oder ein Rest der Formel (II) oder (III) 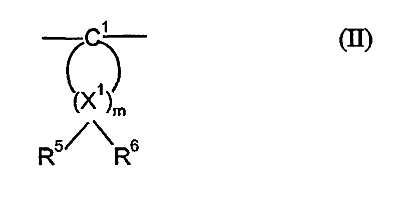 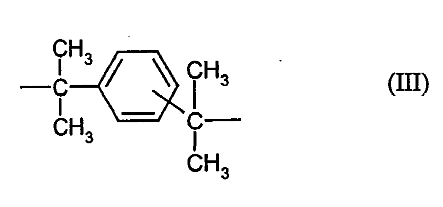
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an trifunktionellen oder mehr als trifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Geeignet sind als Vinyl(co)Polymerisate B) Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- B.1: 50 bis 99, vorzugsweise 60 bis 80 Gew.-Teilen Vinylaromaten und/oder kernsubstituierten Vinylaromaten wie beispielsweise und bevorzugt Styrol, α-Methylstyrol, p-Methylstyrol, p-Chlorstyrol) und/oder Methacrylsäure-(C₁-C₈)-Alkylester wie z.B. und bevorzugt Methylmethacrylat, Ethylmethacrylat), und
- B.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. und bevorzugt Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise und bevorzugt Maleinsäureanhydrid und N-Phenyl-Maleinimid).

Die (Co)Polymerisate B) sind harzartig, thermoplastisch und kautschukfrei.

Besonders bevorzugt ist das Copolymerisat aus B.1 Styrol und B.2 Acrylnitril.

Die (Co)Polymerisate gemäß B) sind bekannt und lassen sich durch radikalische Polymerisation, insbesondere durch Emulsions-, Suspensions-, Lösungs- oder Massepolymerisation herstellen. Die (Co)Polymerisate gemäß Komponente C.1 besitzen vorzugsweise Molekulargewichte M_{w} (Gewichtsmittel, ermittelt durch Lichtstreuung oder Sedimentation) zwischen 15 000 und 200 000.

### Komponente C

Geeignete erfindungsgemäße Silikonacrylatpfropfkautschuke C) werden hergestellt durch Pfropfpolymerisation von aromatischen Alkenyl-Verbindungen und einem Vinylcyanid auf einen Composite-Kautschuk enthaltend eine Polyorganosiloxan-Kautschukkomponente und eine Polyalkylacrylat- oder Polyalkylmethacrylat-Komponente. Der Composite-Kautschuk enthält 10 - 90 Gew.-% Polyorganosiloxankautschuk und 90 bis 10 Gew.-% Polyalkylacrylat- oder Polyalkylmethacrylatkautschuk und hat eine Struktur, wobei der Polyorganosiloxan- und der Polyalkylacrylat- bzw. Polyalkylmethacrylatkautschuk sich gegenseitig durchdringen, so dass die jeweiligen Kautschukkomponenten sich nicht wesentlich voneinander trennen lassen. Der Composite-Kautschuk hat eine mittlere Teilchengröße von 0,08 bis 0,6 µm. Die aromatischen Verbindungen und die Vinylcyanid-Verbindungen werden auf den Composite-Kautschuk aufgepfropft und bilden so den Silikonacrylatpfropfkautschuk C).

Der Silikonacrylatpfropfkautschuk ist bekannt und beispielsweise beschrieben in EP-A 663.452 und US-A 5,807,914. Als erfindungsgemäß geeigneter Silikonacrylatpfropfkautschuk ist der in US-A 5,807,914 beschriebene bevorzugt. Die Polyorganosiloxankautschuk-Komponente kann durch Emulsionspolymerisation von unten genannten Organosiloxanen und einem Verzweigungsmittel (I) hergestellt werden.

Der Organosiloxankautschuk enthält als Monomerbausteine beispielsweise und bevorzugt Dimethylsiloxan oder cyclische Organosiloxane mit wenigstens 3 Ringgliedem, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan.

Die Organosiloxan-Monomere können allein oder in Form von Mischungen mit 2 oder mehr Monomeren eingesetzt werden. Der Polyorganosiloxankautschuk enthält vorzugsweise nicht weniger als 50 Gew.-% und besonders bevorzugt nicht weniger als 70 Gew.-% Organosiloxan, bezogen auf das Gesamtgewicht der Polyorganosiloxan-Kautschuk-Komponente.

Als Verzweigungsmittel (I) werden vorzugsweise silanbasierende Verzweigungsmittel mit einer Funktionalität von 3 oder 4, besonders bevorzugt 4, verwendet. Beispielhaft und vorzugsweise seien genannt:

Trimethoxymethylsilan, Triethoxyphenylsilan, Tetramethoxysilan, Tetraethoxysilan, Tetra-n-propoxysilan, Tetrabutoxysilan.

Tetraethoxysilan ist besonders bevorzugt.

Das Verzweigungsmittel kann allein oder in Mischung von zwei oder mehreren eingesetzt werden.

Zur Pfropfung geeignet sind Pfropfmittel (II) die fähig sind Strukturen der folgenden Formeln zu bilden:

CH₂=C(R²)-COO-(CH₂)ₚ-SiR¹ ₙO_{(3-n)/2} (II-1)

CH₂=CH-SiR¹ ₙO_{(3-n)/2} (II-2)

oder

HS-(CH₂)ₚ-SiR¹ ₙO_{(3-n)/2} (II-3),

wobei
- R¹: für C₁-C₄-Alkyl, vorzugsweise Methyl, Ethyl oder Propyl, oder Phenyl,
- R²: für Wasserstoff oder Methyl stehen,
- n: 0, 1 oder 2 und
- p: eine Zahl von 1 bis 6 bedeuten.

Acryloyl- oder Methacryloyloxysilane sind besonders geeignet die o.g. Struktur (I-1) zu bilden und haben eine hohe Pfropfeffektivität.

Beispielhaft und bevorzugt seien genannt:

β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, θ-Methacryloyloxy-propyldiethoxydiethyl-silan, δ-Methacryloyl-oxy-butyldiethoxydimethyl-silane oder Mischungen hieraus.

Bevorzugt werden 0 bis 10 Gew.-% Pfropfmittel bezogen auf das Gesamtgewicht des Polyorganosiloxankautschuks eingesetzt.

Die Polyalkylacrylat- oder Polyalkylmethacrylat-Kautschukkomponente können hergestellt werden aus Alkylacrylat oder Alkylmethacrylat, einem Verzweigungsmittel (III) und einem Pfropfmittel (IV).

Beispielhafte und bevorzugte Alkylarylate und Alkylmethacrylate sind Methylacrylat, Ethylacrylat, n-Propylacrylat, 2-Ethylhexylacrylat, n-Butylacrylat, Hexylmethacrylat, n-Laurylmethacrylat oder Mischungen hieraus. Besonders bevorzugt ist n-Butylacrylat. Beispielhaft und bevorzugte Verzweigungsmittel (III) sind Ethylenglykol, Dimethylacrylat, Propylenglykoldimethacrylat, 1,3-Butylenglykoldimethacrylat, 1,4-Butylenglykoldimethacrylat oder Mischungen hieraus.

Beispielhaft und bevorzugte Pfropfmittel (IV) sind Arylmethacrylat, Triarylcyanurat, Triarylisocyanurat oder Mischungen hieraus. Arylmethacrylat kann ebenfalls als Verzweigungsmittel eingesetzt werden. Aryl steht vorzugsweise für Phenyl.

Die Gesamtmenge an Verzweigungsmittel (III) und Pfropfmittel (IV) beträgt 0,1 bis 20 Gew.-% basierend auf dem gesamten Gewicht des Polyalkylacrylat- oder Polymethacrylatkautschuks.

Die Herstellung der Polyorganosiloxankautschukkomponente und der Polyalkylacrylat- oder Polyalkylmethacrylatkautschukkomponente ist in US-A 5 807 914 beschrieben.

Der Composite-Kautschuk hat vorzugsweise einen Gelgehalt von > 80 Gew.-%, gemessen durch Extraktion einer löslichen Komponente daraus in Toluol bei 90°C für 12 Stunden.

Die vinylbasierenden Monomere, die auf den Composite-Kautschuk gepfropft werden können, sind aromatische Alkenylverbindungen wie beispielsweise und bevorzugt Styrol, α-Methylstyrol oder Vinyltoluol, und/oder Vinylcyanidverbindungen, bevorzugt Acrylnitril und/oder Methacrylnitril.

Zusätzlich kann eine geringe Menge von Methacrylaten wie Methylmethacrylat oder 2-Ethylhexylmethacrylat oder Acrylate wie Methylacrylat, Ethylacrylat oder Butylacrylat im vinylbasierenden Monomer mit enthalten sein. Ganz besonders bevorzugt ist die Kombination von Styrol und Acrylnitril als Pfropfmonomere. Das Gewichtsverhältnis von aromatischer Alkenylverbindung zur Vinylcyanidverbindung ist bevorzugt im Bereich von 5 : 95 bis 95 : 5, besonders bevorzugt 15 : 75 bis 75 : 15, ganz besonders bevorzugt 20 : 80 bis 80 : 20.

Die Herstellung des gepfropften Composite-Kautschukes ist ebenfalls in US-A 5 807 914 beschrieben.

Die als Komponente C genannten Silikonacrylatpfropfkautschuke sind kommerziell erhältlich. Beispielhaft sei genannt: Metablen^{®} SRK 200 bzw. Metablen^{®} S 2001 der Misubishi Rayon Co. Ltd.

### Komponente D

Mineralische Füllstoffe im Sinne der Erfindung sind solche Stoffe, die den E-Modul erhöhen und die Schwindung verringern. Dies sind insbesondere Glasfasern, Glaskugeln, Glimmer, Silikate, Quarz, Talkum, Titandioxid, Wollastonit, u.a. eingesetzt werden, die auch oberflächenbehandelt sein können. Bevorzugte Verstärkungsstoffe sind handelsübliche Glasfasern. Die Glasfasern, die im Allgemeinen einen Faserdurchmesser zwischen 8 und 14 µm haben, können als Endlosfasern oder als geschnittene oder gemahlene Glasfasern eingesetzt werden, wobei die Fasern mit einem geeigneten Schlichtesystem und einem Haftvermittler bzw. Haftvermittlersystem auf Silanbasis ausgerüstet sein können.

### Komponente E

Weiterhin können feinstteilige anorganische Pulver eingesetzt werden.

Diese bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus TiO₂, SiO₂, SnO₂, ZnO, ZnS, Böhmit, ZrO₂, Al₂O₃, Aluminiumphosphate, Eisenoxide, ferner TiN, WC, AlO(OH), Sb₂O₃, Eisenoxide, NaSO₄, Vanadianoxide, Zinkborat, Silicate wie Al-Silikate, Mg-Silikate, ein-, zwei-, dreidimensionale Silikate. Mischungen und dotierte Verbindungen sind ebenfalls verwendbar.

Des weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, z.B. Böhmit oder TiO₂.

Die durchschnittlichen Teilchendurchmesser der Nanopartikel sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782-796.

Die anorganischen feinstteiligen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wässrigen Emulsion und den feinstteiligen anorganischen Pulvern dar, gegebenenfalls in Form von Dispersionen, Suspensionen, Pasten oder Solen der feinstteiligen anorganischen Materialien.

Besonders bevorzugt sind Glasfasern oder Glaskugeln.

Die erfindungsgemäßen Zusammensetzungen können wenigstens eines der üblichen Additive, wie Gleit- und Entformungsmittel, beispielsweise Pentaerythrittetrastearat, Nukleierungsmittel, Antistatika, Stabilisatoren von Komponente D, verschiedene Füll- und Verstärkungsstoffe sowie Farbstoffe und Pigmente enthalten.

Die erfindungsgemäßen Zusammensetzungen enthaltend die Komponenten A bis D und gegebenenfalls Zusätzen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die Formmassen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor wie z.B. I-Tafelträger oder Abdeckungen. Besonders bevorzugt sind Sicherheitsteile für Airbagabdeckungen. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür. Spielfahrzeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A.1

Lineares Polycarbonat auf Basis Bisphenol A mit einer relativen Lösungsviskosität von 1,272, gemessen in CH₂Cl₂ als Lösungsmittel bei 25°C und einer Konzentration von 0,5 g/100 ml.

### Komponente A.2

Lineares Polycarbonat auf Basis Bisphenol A mit einer relativen Lösungsviskosität von 1,202, gemessen in CH₂Cl₂ als Lösungsmittel bei 25°C und einer Konzentration von 0,5 g/100 ml.

### Komponente B

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente C

- C.1:: Metablen^{®} S 2001 (Methylmethacrylat-butylacrylatdimethylsiloxan Copolymer) der Mitsubishi Rayon Co. Ltd.
- C.2:: Metablen^{®} SRK 200 (Methylmethacrylat-butylacrylatdimethylsiloxan Copolymer) der Mitsubishi Rayon Co. Ltd.

### Vergleichskomponente C*

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,28 µm), hergestellt durch Emulsionspolymerisation.

### Komponente D

D-1: Glasfaser CS 7942, Bayer AG, Leverkusen

### Additive

Pentaerythrittetrastearat, Phosphitstabilisator.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Eine Zusammenstellung der Eigenschaften der erfindungsgemäßen Formmassen ist in der nachfolgenden Tabelle 1 gegeben:

**Tabelle 1 Zusammensetzung und Eigenschaften**

| **Beispiele** | **1 (Vergleich)** | **2** | **3** |
|---|---|---|---|
| Komponenten [Gew.-Tle] | | | |
| A1 | 68 | 20 | 20 |
| A2 | - | 48 | 48 |
| B | 16 | 26 | 26 |
| C1 | - | 6 | - |
| C2 | - | - | 6 |
| C* | 16 | - | - |
| D1 | 11 | 11 | 11 |
| D2 | - | - | - |
| PETS | 0,5 | 0,5 | 0,5 |
| Stabilisator | 0,12 | 0,12 | 0,12 |

| **Eigenschaften:** | | | |
|---|---|---|---|
| E-Modul MPa ISO 527 | 3590 | 3890 | 3850 |
| Vicat B DIN 53 460 °C | 131 | 135 | 135 |
| Schlagzähigkeit 0 h/RT Izod ISO 180-1 U | 26 | 25 | 25 |
| Schlagzähigkeit 250 h bei 120°C | 18 | 24 | 24 |
| Schlagzähigkeit 750 h bei 120°C | 11 | 23 | 24 |
| Schlagzähigkeit 1250 h bei 120°C | 9 | 23 | 24 |
| Scherviskosität 260°C/1000 s⁻¹ ISO 11443 | 300 | 200 | 200 |
| Oberfläche | 0 | + | + |

## Patentansprüche

1. Zusammensetzungen bestehend aus
A) 40 - 95 Gew.-Teile (bezogen auf 100 Gew.-Teile der Gesamtzusammensetzung) aromatisches Polycarbonat mit einem mittleren Gewichtsmittelmolekulargewicht von 10.000 bis 200.000 und/oder Polyestercarbonat
B) 0 - 45 Gew.-Teile Teile (bezogen auf 100 Gew.-Teile der Gesamtzusammensetzung) (Co)Polymer auf Basis von Vinylmonomeren
C) 1 - 25 Gew.-Teile Teile (bezogen auf 100 Gew.-Teile der Gesamtzusammensetzung) Silikonacrylatpfropfkautschuk enthaltend einen Composite-Kautschuk, der 10 - 90 Gew.-% Polyorganosiloxankautschuk und 90 bis 10 Gew.-% Polyalkylacrylat- oder Polyalkylmethacrylatkautschuk enthält, wobei der Polyorganosiloxan- und der Polyalkylacrylat- bzw. Polyalkylmethacrylatkautschuk sich gegenseitig strukturell durchdringen, so dass die jeweiligen Kautschukkomponenten sich nicht wesentlich voneinander trennen lassen,
D) 0,4 - 40 Gew.-Teile Teile (bezogen auf 100 Gew.-Teile der Gesamtzusammensetzung)mineralischen Füllstoff und
E) gegebenenfalls mindestens ein Additiv ausgewählt aus der Gruppe der feinstteiligen anorganischen Pulver, welche einen durchschnittlichen Teilchendurchmesser kleiner gleich 200 nm aufweisen, Gleit- und Entformungsmittel, Nukleierungsmittel, Antistatika, Stabilisatoren, von Komponente D verschiedene Füll- und Verstärkungsstoffe sowie Farbstoffe und Pigmente.

2. Zusammensetzungen gemäß Anspruch 1, worin der Silikonacrylatpfropfkautschuk durch Pfropfpolymerisation aus aromatischen Alkenylverbindungen und eines Vinylcyanids auf den Composite-Kautschuk gemäß Komponente C erhältlich ist.

3. Zusammensetzungen gemäß Anspruch 1 und 2, enthaltend als Komponente B Polymerisate von mindestens einem Monomeren aus der Gruppe der Vinylaromaten, Vinylcyanide, Methacrylsäure-(C₁-C₈)-Alkylester, ungesättigte Carbonsäuren sowie Derivate ungesättigter Carbonsäuren.

4. Zusammensetzungen gemäß Anspruch 1 bis 3, enthaltend als Komponente B (Co)Polymerisate aus
B.1 50 bis 99 Gew.-Teilen (bezogen auf 100 Gew.-Teilen B) Vinylaromaten und/oder Methacrylsäure-(C₁-C₈)-Alkylester und
B.2 1 bis 50 Gew.-Teile (bezogen auf 100 Gew.-Teilen B) Vinylcyanide und/oder Methacrylsäure-(C₁-C₈)-Alkylester und/oder ungesättigte Carbonsäuren und/oder Derivate ungesättigter Carbonsäuren.

5. Zusammensetzungen gemäß Anspruch 1 bis 4, enthaltend 1 bis 30 Gew.-Teile mineralischer Füllstoffe D.

6. Zusammensetzungen gemäß Anspruch 1 bis 5, enthaltend als Komponente D mineralische Füllstoffe ausgewählt aus Glasfasern, Glaskugeln, Glimmer, Silikate, Quarz, Talkum, Titandioxid, Wollastonit oder Mischungen hieraus.

7. Zusammensetzungen gemäß Anspruch 1 bis 6 enthaltend Additive.

8. Verfahren zur Herstellung von Zusammensetzungen gemäß Anspruch 1 bis 7, wobei die Komponenten A bis D und gegebenenfalls Additive gemischt und bei erhöhter Temperatur compoundiert werden.

9. Verwendung von Zusammensetzungen gemäß Anspruch 1 bis 8 zur Herstellung von Formteilen.

10. Formteile, erhältlich aus Zusammensetzungen gemäß Anspruch 1 bis 9.

11. Gehäuseteile, Abdeckplatten für den Bausektor, Teile für den Kfz-Sektor und Sicherheitsteile für Airbagabdeckungen, erhältlich aus Zusammensetzungen gemäß Anspruch 1 bis 10.

## Claims

1. Compositions consisting of
A) from 40 - 95 parts by weight (in relation to 100 parts by weight of the total composition) of aromatic polycarbonate having an average weight average molecular weight of 10,000 to 200,000 and/or polyester carbonate
B) from 0 - 45 parts by weight (in relation to 100 parts by weight of the total composition) of (co)polymer based on vinyl monomers
C) from 1 - 25 parts by weight (in relation to 100 parts by weight of the total composition) of silicone acrylate graft rubber comprising a composite rubber comprising 10-90 wt.% polyorganosiloxane rubber and 90 to 10 wt.% polyalkyl acrylate rubber or polyalkyl methacrylate rubber, wherein the polyorganosiloxane rubber and the polyalkyl acrylate rubber or the polyalkyl methacrylate rubber interpenetrate structurally such that the respective rubber components substantially cannot be separated from one another,
D) from 0.4 - 40 parts by weight (in relation to 100 parts by weight of the total composition) of mineral filler, and
E) optionally at least one additive selected from the group of extremely finely divided inorganic powders, which have average particle diameters of smaller than or equal to 200 nm, lubricants and mould release agents, nucleating agents, antistatic agents, stabilisers, fillers and reinforcing materials different from component D as well as dyes and pigments.

2. Compositions according to Claim 1, in which the silicon acrylate graft rubber is obtainable by graft polymerisation of aromatic alkenyl compounds and a vinylcyanide onto the composite rubber according to component C.

3. Compositions according to Claims 1 and 2, comprising as the component B polymers of at least one monomer from the group comprising vinyl aromatics, vinyl cyanides, methacrylic acid-(C₁-C₈)-alkyl esters, unsaturated carboxylic acids as well as derivatives of unsaturated carboxylic acids.

4. Compositions according to any of Claims 1 to 3, comprising as the component B (co)polymers of
B.1 from 50 to 99 parts by weight (in relation to 100 parts by weight of B) of vinyl aromatics and/or methacrylic acid-(C₁-C₈)-alkyl esters and
B.2 from 1 to 50 parts by weight (in relation to 100 parts by weight of B) of vinyl cyanides and/or methacrylic acid-(C₁-C₈)-alkyl esters and/or unsaturated carboxylic acids and/or derivatives of unsaturated carboxylic acids.

5. Compositions according to any of Claims 1 to 4 comprising from 1 to 30 parts by weight of mineral fillers D.

6. Compositions according to any of Claims 1 to 5 comprising as the component D mineral fillers selected from among glass fibres, glass spheres, mica, silicates, quartz, talc, titanium dioxide, wollastonite or mixtures thereof.

7. Compositions according to any of Claims 1 to 6 comprising additives.

8. Process for the preparation of compositions according to any of Claims 1 to 7, wherein the components A to D and optionally additives are mixed and compounded at elevated temperature.

9. Use of compositions according to any of Claims 1 to 8 for the production of mouldings.

10. Mouldings obtainable from compositions according to any of Claims 1 to 9.

11. Housing components, covering plates for the construction sector, components for the automotive sector and safety components for airbag covers, obtainable from compositions according to any of Claims 1 to 10.

## Revendications

1. Compositions consistant en
A) 40 à 95 parties en poids (pour 100 parties en poids de la composition totale) d'un polycarbonate aromatique au poids moléculaire moyen, moyenne en poids, de 10 000 à 200 000, et/ou d'un polyester-carbonate,
B) 0 à 45 parties en poids (pour 100 parties en poids de la composition totale) d'un (co)polymère à base de monomères vinyliques,
C) 1 à 25 parties en poids (pour 100 parties en poids de la composition totale) d'un caoutchouc greffé de silicone-acrylate contenant un caoutchouc composite contenant lui-même 10 à 90 % en poids d'un caoutchouc de polyorganosiloxane et de 90 à 10 % en poids d'un caoutchouc de polyacrylate ou polyméthacrylate d'alkyle, le caoutchouc de polyorganosiloxane et le caoutchouc de polyacrylate ou polyméthacrylate d'alkyle présentant une structure dans laquelle ils se pénètrent mutuellement de sorte que les composants caoutchouc ne peuvent plus se séparer l'un de l'autre,
D) 0,4 à 40 parties en poids (pour 100 parties en poids de la composition totale) d'une manière de charge minérale, et
E) le cas échéant au moins un additif choisi dans le groupe des poudres minérales en particules extrêmement fines, à un diamètre de particule moyen inférieur à 200 nm, des agents lubrifiants et agents de démoulage, des agents de nucléation, des agents antistatiques, des stabilisants, des matières de charges et matières renforçants autres que celles du composant D, ainsi que des colorants et pigments.

2. Compositions selon revendication 1 dans laquelle le caoutchouc greffé de silicone-acrylate a été obtenu par polymérisation greffée de composés aromatiques alcényliques et d'un cyanure de vinyle sur le caoutchouc composite du composant C.

3. Compositions selon les revendications 1 et 2 contenant, pour le composant B, des polymères d'au moins un monomère du groupe des dérivés vinylaromatiques, des cyanures de vinyle, des méthacrylates d'alkyle en C₁-C₈, des acides carboxyliques insaturés et dérivés d'acides carboxyliques insaturés.

4. Compositions selon les revendications 1 à 3 contenant, pour le composant B, des (co)polymères de
B.1 50 à 99 parties en poids (pour 100 parties en poids de B) de dérivés vinylaromatiques et/ou de méthacrylates d'alkyle en C₁-C₈ et
B.2 1 à 50 parties en poids (pour 100 parties en poids du composant B) de cyanures de vinyle et/ou de méthacrylates d'alkyle en C₁-C₈ et/ou d'acides carboxyliques insaturés et/ou de dérivés d'acides carboxyliques insaturés.

5. Compositions selon les revendications 1 à 4, contenant 1 à 30 parties en poids des matières de charge minérales D.

6. Compositions selon les revendications 1 à 5 contenant, pour le composant D, des matières de charge minérales choisies parmi les fibres de verre, les billes de verre, le mica, les silicates, le quartz, le talc, le dioxyde de titane, la wollastonite et leurs mélanges.

7. Composition selon les revendications 1 à 6 contenant des additifs.

8. Procédé pour la préparation des compositions selon les revendications 1 à 7, consistant à mélanger les composants A à D et le cas échéant les additifs et à homogénéiser à température élevée.

9. Utilisation des compositions selon les revendications 1 à 8 pour la fabrication de pièces moulées.

10. Pièces moulées obtenues à partir des compositions selon les revendications 1 à 9.

11. Pièces de logement, plaques de couverture pour le secteur du bâtiment, pièces pour le secteur de l'automobile et pièces de sécurité pour recouvrements d'air-bags, obtenues à partir de compositions selon les revendications 1 à 10.
